# EUROPÄISCHE PATENTANMELDUNG

(11) **EP 1 148 397 A2**
(43) Veröffentlichungstag der Anmeldung: **24.10.2001**
(21) Anmeldenummer: 01103441.0
(22) Anmeldetag: 14.02.2001
(51) Int. Cl.: G05B 19/042

(54) **System und Verfahren zur Steuerung von Prozessreglern**

(30) Priorität: 04.04.2000 DE 10016668
(71) Anmelder: Siemens Building Technologies AG, 8008 Zürich (CH)
(72) Erfinder: Illi, Bruno, 6010 Kriens (CH)
(74) Vertreter: Zedlitz, Peter, Dipl.-Inf.

(57) **Zusammenfassung**

Die vorliegende Erfindung betrifft ein System und ein Verfahren zur Steuerung von Prozessreglern, mit mindestens einem Prozessregler (14), der zur Regelung von Prozessen (22) oder Teilprozessen (23a..23d) in Speicher (16) speicherbare Prozessprogramme ausführt und entsprechende Steuersignale über mindestens eine Kommunikationsschnittstelle (17) an die Prozesse (22) oder Teilprozesse (23a..23d) sendet, und einem Datenspeicher (2), der über Kommunikationswege (11) Daten zur Steuerung des mindestens einen Prozessreglers (14) an den Prozessregler (14) übermittelt, wobei der Datenspeicher (2) eine Datenbank (1) aufweist, die Daten enthält, die zur Steuerung des mindestens einen Prozessreglers (14) verwendbar sind, die über Kommunikationswege (11) von verschiedenen Orten aus veränderbar sind, und die zumindest teilweise Informationen für die zu regelnden Prozesse (22) oder Teilprozesse (23a..23d) enthalten. Die Erfindung eignet sich zur Steuerung von Heizungs- und/oder Lüftungsreglem und/oder Klimaanlagen eines Gebäudes, wobei die Datenbank (1) aus den Daten der persönlichen Terminkalender der Benutzer des Gebäudes besteht.

## Beschreibung

Die vorliegende Erfindung betrifft ein System zur Steuerung von Prozessreglern nach dem Oberbegriff des Patentanspruchs 1, ein Verfahren zur Steuerung von Prozessreglern nach dem Oberbegriff des Patentanspruchs 9 sowie verschiedene Verwendungen des Systems bzw. des Verfahrens insbesondere nach den Patentansprüchen 15 und 16.

Bei herkömmlichen Systemen existieren Prozessregler, die zur Regelung von Prozessen oder Teilprozessen eingesetzt werden. Diese Prozesse bzw. Teilprozesse können beispielsweise die Energieerzeugung für ein Gebäude, die Frischluftzufuhr zu Räumen von Gebäuden, die Regelung von Klimaanlagen zur Einstellung eines angenehmen Raumklimas von Räumen eines Gebäudes, die Heizungsregelung oder ähnliche Prozesse der Gebäudeleittechnik sein, die für Heizungssysteme, Alarmsysteme oder ähnliche Systeme verantwortlich sind. Die entsprechenden Prozessregler sind beispielsweise Heizungsregler für die Regelung eines Öl- oder Gasbrenners, Klimaanlagenregler zur Regelung der Klimaanlage oder beispielsweise Lüftungsregler zur Regelung der Lüftungsanlage. Dabei führen die Prozessregler in Speicher speicherbare Prozessprogramme aus und senden entsprechende Steuersignale über geeignete Kommunikationsschnittstellen an die Prozesse oder Teilprozesse, die wiederrum Rückmeldesignale an den Prozessregler senden, um die Regelung zu ermöglichen. Derartige Rückmeldesignale können auch von separaten Sensoren stammen, die beispielsweise die Temperatur eines Raumes oder die Luftfeuchtigkeit messen.

Dabei ist es insbesondere bei der Gebäudeleittechnik bekannt, die unterschiedlichen Prozessregler durch einen zentralen Steuerrechner zu steuern, der üblicherweise einen Datenspeicher aufweist, der über Kommunikationswege Daten zur Steuerung der Prozessregler an diese Prozessregler übermittelt. Derartige Steuerleitsysteme befinden sich beim Stand der Technik in einer Steuerleitzentrale, die verschiedene Zentralrechner aufweist, um die verschiedenen Prozessregler der unterschiedlichen Systeme eines Gebäudes zu steuern, die wiederrum die entsprechenden Prozesse bzw. Teilprozesse regeln.

Weiterhin sind elektronische Hilfsmittel bekannt, die beispielsweise den Nutzern von Bürogebäuden zur Verfügung stehen, um ihren Tagesablauf zu planen. So stehen beispielsweise elektronische Agenden (Organizer) zur Verfügung, die als Speicher- und Eingabemittel für Terminplaner, Notizbücher und beispielsweise auch für Adressverzeichnisse genutzt werden können. Parallel dazu stehen auf dem Personalcomputer Software-Lösungen zur Verfügung, die eine sehr ähnliche Funktionalität bieten. Weiterhin existieren Lösungen, die eine Synchronisation zwischen den "Organizer"-Datenbanken und den Datenbanken des Personalcomputers ermöglichen. Weiterhin bestehen entsprechende Software-Lösungen, um diese Synchronisation über Kommunikationsnetze, wie beispielsweise dem Internet, durchzuführen. Dies ermöglicht es, dem Nutzer derartiger elektronischer Agenden "seine Datenbank" von verschiedenen Orten aus und mit den verschiedensten Hilfsmitteln zu pflegen. Diese Datenbank beinhaltet Angaben zum Terminplan, Adressverzeichnisse, Notizen und ähnliches.

Die Gebäudeleitzentrale eines Gebäudes oder auch der Heizungsregler für die Heizung eines Einfamilienhauses benötigen jedoch spezielle Eingabemittel zur Eingabe von An- und Abwesenheitszeiten der Nutzer des Gebäudes, so daß diese sich jeweils mit den entsprechenden Prozessreglern einzeln vertraut machen müssen und insbesondere auch lernen müssen, die entsprechenden Eingabemasken solcher Prozessrogramme dieser Prozessegler zu bedienen.

Der Erfindung liegt daher die Aufgabe zugrunde, die Bedienung bzw. Programmierung von Prozessreglern zu vereinfachen und die Steuerung von Prozessreglern für den Benutzer dieser Prozessregler kostengünstig zu vereinfachen.

Die Erfindung löst diese Aufgabe durch die kennzeichnenden Merkmale der unabhängigen Patentansprüche 1 und 9. Weitere vorteilhafte Ausgestaltungen der Erfindung sind in den Unteransprüchen gekennzeichnet und beansprucht. Einige vorteilhafte Verwendungen der Erfindung sind in den Ansprüchen 15 und 16 gekennzeichnet.

Das erfindungsgemäße System zur Steuerung von Prozessreglern, die zur Regelung von Prozessen oder Teilprozessen in Speichern speicherbare Prozessprogramme ausführen und entsprechende Steuersignale über mindestens eine Kommunikationsschnittstelle an die Prozesse oder Teilprozesse senden, erhalten Daten eines Datenspeichers über Kommunikationswege, die zur Ausführung der Prozessprogramme verwendet werden können. Diese Daten sind dabei erfindungsgemäß in der Datenbank eines Datenspeichers gespeichert und sind zur Steuerung des mindestens einen Prozessreglers verwendbar. Weiterhin sind die Daten über Kommunikationswege von verschiedenen Orten aus veränderbar und enthalten zumindest teilweise Informationen für die zu regelnden Prozesse oder Teilprozesse.

Die Datenbank, die die Daten zur Steuerung des mindestens einen Prozessreglers aufweist, ist somit von verschiedenen Orten aus zum Schreiben, Lesen oder Verändern von Daten zugänglich. Die Prozesse oder Teilprozesse, die beispielsweise das Raumklima des Raumes eines Gebäudes regeln, werden somit durch entsprechende Prozessregler geregelt, die Daten dieser Datenbank erhalten, wobei diese Daten auch aus mehreren Datenbanken stammen können, die von den Nutzern des Raumes des Gebäudes aufgrund ihrer persönlichen Agenden stets nachgeführt und aktualisiert werden.

Der mindestens eine Prozessregler verändert dabei die in Speichern speicherbaren Prozessprogramme zur Ausführung der Prozesse bzw. Teilprozesse mittels der Daten der Datenbank oder er führt die Prozessprogramme mittels dieser Daten aus. Die Datenbank selbst befindet sich alternativ in einem zentralen Datenspeicher, der über Kommunikationswege bzw. mittels eines Kommunikationsnetzes mit mindestens einem Datenverarbeitungsgerät verbindbar ist, so daß die Daten der Datenbank durch das mindestens eine Datenverarbeitungsgerät veränderbar sind.
Nach einer anderen vorteilhaften Ausgestaltung der Erfindung befindet sich die Datenbank bzw. Kopien der Datenbank in mehreren dezentralen Datenspeichern, die ebenfalls über Kommunikationswege und/oder einem Kommunikationsnetz miteinander verbindbar sind, wobei die Daten der Datenbank bzw. die Daten der Kopien der Datenbank mittels eines Synchronisationsprozesses zwischen den dezentralen Datenspeichern abgleichbar sind. Nutzt der Benutzer des Raumes eines Gebäudes beispielsweise einen Personalcomputer zur Planung seiner Termine sowie ein elektronisches Notizbuch (Organizer) und beispielsweise zusätzlich ein Mobiltelefon, in welches ebenfalls Termine bzw. Notizen eintragbar sind, so kann der Benutzer die persönliche Datenbank, die sich sowohl auf dem Personlcomputer, auf dem elektronischen Notizbuch als auch auf dem Mobiltelefon befindet, über Funk oder über drahtgebundene Verbindungswege synchronisieren, so daß die Datenbanken stets identische und abgeglichene Daten enthalten.

Nach einer weiteren Ausführungsform der Erfindung, ruft der mindestens eine Prozessregler jeweils die Daten derjenigen Kopie der Datenbank ab, die die aktuellsten Daten enthält. Der Prozessregler ruft daher vor einem Abruf der entsprechenden Daten aus einer der dezentralen Datenbanken ein Aktualisierungsdatum ab, um festzustellen, welche der Datenbanken am jüngsten ist. Die Daten der jüngsten Datenbank werden dann - falls ein Synchronisationsprozess noch nicht stattgefunden hat - zur Steuerung des Prozessreglers verwendet.

Die Datenbank bzw. Kopien der Datenbank befinden sich nach einer bevorzugten Ausführungsform der Erfindung in dezentralen Datenspeichern, die sich wiederum in verschiedenen Datenverarbeitungsgeräten befinden. Diese Daten sind dann zur Steuerung auch mehrerer Prozessregler verwendbar, wobei jeder Prozessregler zur Regelung eines Regelsystems dient. Dieses Regelsystem weist sowohl den Prozessregler selbst als auch verschiedene Prozesse bzw. Teilprozesse auf, sowie ggf. einzelne Sensoren, die den Prozessregler mit dem Ist-Wert des zu regelnden Prozessparameters versorgen. Der entsprechende Soll-Wert wird von der Datenbank bzw. von einer Kopie der Datenbank geliefert.

Mit Vorteil ist die Datenbank in einem Computer und/oder in einem Funktelefon und/oder in einem elektronischen Kalender abspeicherbar, so daß der Computer und/oder das Funktelefon und/oder der elektronische Kalender die Daten der Datenbank untereinander austauschen und synchronisieren können, um die Datenbank auf den verschiedenden dezentralen Datenverarbeitungsgeräten möglichst auf dem aktuellsten Stand zu halten. Die Daten der Datenbank werden dann beispielsweise zur Steuerung eines Heizungsreglers zur Regelung des Raumklimas eines Raumes benutzt, die der Benutzer des Computers und/oder des Funktelefons und/oder des elektronischen Kalenders benutzt. Die Regelung des Raumklimas des Raumes, in welchem sich der Benutzer regelmäßig aufhält, wird somit anhand der An- bzw. Abwesenheitszeiten des Benutzers gesteuert, die dieser in seinen persönlichen Terminkalender eingibt.

Das in Speichern speicherbare Prozessprogramm, das der Prozessregler ausführt, beinhaltet beispielsweise bestimmte Grundzeiten, zu welchem der Benutzer des Raumes sich im Raum aufhält. Aufgrund dieser Grundzeiten wird das Raumklima auf einen angenehmen Wert geregelt bzw. gesteuert. Erhält der Prozessregler beispielsweise von dem entsprechenden Datenverarbeitungsgerät des Benutzers die Information, daß sich dieser im Urlaub befindet oder erst zu einem späteren Zeitpunkt als durch die Grundzeiten vorgegeben den Raum nutzen will, so werden die Daten des Prozessprogrammes mittels der Daten der Datenbank des Benutzers überschrieben, so daß der Prozessregler aufgrund der aktuellen Daten der persönlichen Agenda des Nutzers des Raumes den Prozess zur Regelung des Raumklimas steuert.

Der Gegenstand der vorliegenden Erfindung hat den Vorteil, daß die Schnittstelle zwischen Mensch und Technik vereinheitlicht wird, d.h., daß der Nutzer eines elektronischen Notizbuchs beispielsweise nicht die Eingabemittel eines Prozessreglers lernen muß, sondern dies automatisch durch eine Datenübertragung von der persönlichen Agenda des Benutzers zu dem Prozessregler geschieht.

Die Daten zur Steuerung des Prozessreglers können dabei mit Vorteil auch von mehreren Datenbanken stammen, wobei die Daten einer jeden Datenbank einem individuellen Benutzer von Räumen eines Gebäudes zugeordnet werden. Die Daten jeder Datenbank werden dann zur Steuerung eines oder mehrerer Heizungsregler zur Regelung des Raumklimas der Räume benutzt, die von den Benutzern der einzelnen Datenbanken benutzt werden. Mit Vorteil läßt sich das erfindungsgemäße System bzw. das erfindungsgemäße Verfahren zur Steuerung von Heizungs- und/oder Lüftungsreglern und/oder Klimaanlagen eines Gebäudes verwenden, wobei bsp. eine zentrale Datenbank sämtliche Daten der persönlichen Terminkalender der Benutzer des Gebäudes beinhaltet.

Alternativ rufen die Prozessregler der Gebäudeleittechnik die Daten von Datenbanken persönlicher Terminkalender sämtlicher Benutzer des Gebäudes direkt ab, um die in Speichern speicherbaren Prozessprogramme anhand dieser Daten auszuführen. Das Raumklima eines Raumes des Gebäudes wird dabei anhand derjenigen Daten von Benutzern des Raumes gesteuert, die den Raum am längsten benutzen.

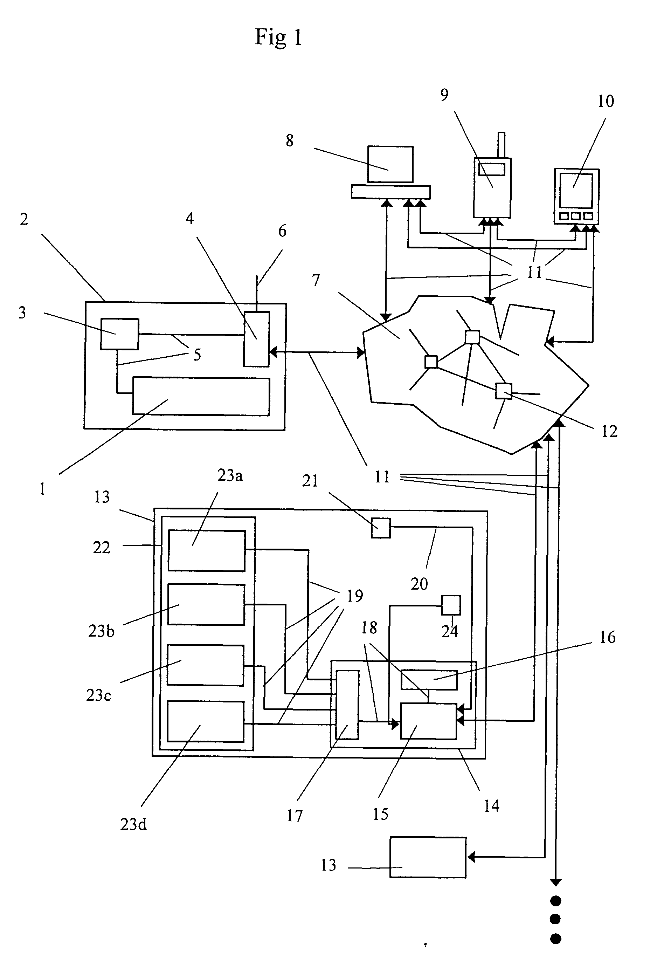

Eine vorteilhafte Ausführungsform der Erfindung wird anhand der Figur 1 erläutert, die das schematische Zusammenwirken verschiedener Datenverarbeitungsgeräte mit dem Regelsystem bzw. dem Prozessregler zeigt. Insbesondere erläutert Figur 1 die Steuerung eines Regelsystems 13 durch für den Benutzer dieser Regelsysteme bekannte Hilfsmittel. Der Umgang mit komplexen Prozessreglern wird durch die Nutzung dieser bekannten Hilfsmittel wesentlich vereinfacht.

Figur 1 zeigt die schematische Darstellung eines Datenspeichers 2 mit Datenbank 1, Datenprozessor 3 und Datenschnittstelle 4, die über Verbindungsleitungen 5 miteinander verbunden sind. Ein solcher Datenspeicher 2 ist in Figur 1 als zentraler Datenspeicher 2 dargestellt, jedoch kann sich dieser auch nach einer anderen Ausführungsform der Erfindung in entsprechenden Datenverarbeitungsgeräten 8, 9 oder 10 befinden. Diese Datenverarbeitungsgeräte können beispielsweise ein Computer 8, ein Funktelefon 9 oder ein elektronischer Kalender 10 sein.

Der Computer 8, das Funktelefon 9 oder auch der elektronische Kalender 10 sind über entsprechende Kommunikationswege wie beispielsweise bidirektionale Verbindungsleitungen oder Funkverbindungen miteinander verbunden. Dementsprechend weist die Datenschnittstelle 4 des Datenspeichers 2 ein Funkgerät 6 auf, welches entsprechende Funkverbindungen mit anderen elektronischen Geräten herstellen kann, die der Benutzer des Regelsystems 13 benutzt.

Das Regelsystem 13 kann beispielsweise die Heizungsregelung eines Einfamilienhauses sein, die Klimaregelung verschiedener Räume eines Bürogebäudes oder auch ein Einzelraumregelsystem für die einzelnen Räume eines Schulhauses. Das Regelsystem 13 weist einen Prozessregler 14 auf, der einen Prozessor 15, einen Speicher 16 und eine Kommunikationsschnittstelle 17 beinhaltet. Diese sind über beispielsweise einen Datenbus 18 miteinander verbunden, so daß der Prozessor 15 die im Speicher 16 speicherbaren Prozessprogramme ausführt und entsprechende Steuerbefehle über die Kommunikationsschnittstelle 17 mittels Datenwegen 19 an die Teilprozesse 23a-23d eines Gesamtprozesses 22 sendet. Handelt es sich beispielsweise um die Regelung der Raumtemperatur eines Raumes, kann zusätzlich ein Sensor 21 zur Detektierung der Raumtemperatur vorhanden sein, der über eine Datenleitung 20 den Raumtemperatur-Ist-Wert an den Prozessor 15 sendet. Der Prozessor 15 ist über entsprechende Kommunikationswege 11 mit einem Kommunikationsnetz 7 verbunden, das Verbindungsknoten 12 und entsprechende weitere Kommunikationswege aufweist, um die Datenkommunikation zwischen den Datenverarbeitungsgeräten 8, 9 oder 10 und/oder dem Prozessregler 14 herzustellen.

Figur 1 zeigt schematisch die Steuerung des Prozessreglers 14 eines Regelsystems 13. Jedoch beinhaltet die Erfindung auch die Möglichkeit, eine Vielzahl von Regelsystemen 13 zu steuern, die schematisch am unteren Ende der Figur 1 dargestellt sind. Die Datenverarbeitungsgeräte 8, 9 oder 10 sind sowohl untereinander als auch mit dem Kommunikationsnetz 7 durch bidirektionale Kommunikationsverbindungen 11 miteinander verbunden. Dies gewährleistet eine Synchronisation der Datenbanken der Datenverarbeitungsgeräte als solches als auch den Zugriff des Prozessreglers 14 auf die jeweils aktuellste Datenbank eines der Datenverarbeitungsgeräte 8, 9 oder 10 oder einer zentralen Datenbank 1 innerhalb eines zentralen Datenspeichers 2.

Nachfolgend werden einige Beispiele zur Anwendung des in Figur 1 schematisch gezeigten Systems dargestellt:

### 1. Beispiel im Bürogebäude

Jeder Bürobenutzer legt seine Standard-Benutzungszeit im Büro 13 fest. Während dieser Zeit wird sein Büro 13 auf Komfort-Niveau gesteuert. Dieses Komfort-Niveau betrifft das Raumklima wie beispielsweise Temperatur (Teilprozess 23a), Feuchte (Teilprozess 23b), Lüftung (Teilprozess 23c) oder Licht (Teilprozess 23d). Wenn nun in der elektronischen Agenda des Benutzers des Büros festgestellt wird, daß der oder die Bürobenutzer für eine gewisse Zeit abwesend sind, kann der Raumkomfort auf ein Bereitschaftsniveau reduziert werden. Diese Funktion kann dann beispielsweise durch Präsenz-Sensoren 24 ergänzt werden.

Entsprechend können Besprechungszimmer 13 durch den elektronischen Belegungsplan immer zur richtigen Zeit auf das notwendige Komfort-Niveau gesteuert werden. Im Gegensatz zur reinen Steuerung des Prozessreglers 14 mit Präsenz-Sensoren 24 ermöglicht die Berücksichtigung der persönlichen Datenbanken 1 der Nutzer der Besprechungszimmer eine weitgehend vorausschauende Bereitstellung des Raumkomforts und damit auch eine Optimierung der Gebäudetechnik in Bezug auf Komfort und Energieverbrauch. Wesentlich dabei ist, daß mit ein und derselben Agenden der Nutzer dieser Büroräume sowohl der Tag der Benutzer als solches geplant, als auch die Gebäudeleittechnik gesteuert werden kann.

### 2. Beispiel im Schulhaus

Für jedes Schulzimmer 13 wird eine elektronische Agenda in einem zentralen Datenspeicher 2 geführt. So kann mit einem Einzelraumregelsystem jedes Zimmer zur richtigen Zeit auf Komfort-Niveau gesteuert werden. Die Energieerzeugung erkennt aufgrund aller Belegungspläne, die ohnehin vorhanden sind, um den jeweiligen Lehrern und Schülern die Räume des Unterrichts bekannt zu geben, wann welche Art von Energie zur Verfügung gestellt werden muß. Bei Energieengpässen ist dann auch eine intelligente Verteilung der vorhandenen Energie möglich. Ferienprogramme mit Berücksichtigung von Ausnahmebelegungen sind so mit Hilfe der elektronischen Agenda einer zentralen Datenbank 1 einfach programmierbar.

### 3. Beispiel für ein Einfamilienhaus

Für ein Einfamilienhaus 13 kann der Hausbenutzer auf einfachste Art und Weise seinen "Belegungsplan" auf dem Computer 8 oder seinem elektronischen Kalender 10 erstellen. So kann er beispielsweise eine Belegungszeit von 6 bis 23 Uhr definieren. Während dieser Zeit wird sein Haus durch den Prozessregler 14 (Heizungsregler) auf Komfort-Niveau gehalten. Außerhalb der Belegungszeit wird auf ein reduziertes Niveau geregelt. Das Festlegen des Prozessprogrammes, d.h des Zeitschaltprogrammes für die Heizung, das im Speicher 16 gespeichert wird, erfolgt auf diese Art und Weise mit einem für den Benutzer des Hauses gewohnten Hilfsmittel. Wenn nun spezielle einmalige Benutzerwünsche auftreten, können diese in der persönlichen Agenda eingetragen werden und die Heizung paßt sich automatisch diesen besonderen Umständen an, ohne daß der Nutzer des Heizungsreglers den Heizungsregler selbst neu programmieren muß.

Auch das Programmieren der Ferienabwesenheit erfolgt somit auf einfachste Art und Weise. Insbesondere kann durch die Bedienung der Datenbank 1 von irgendeinem Ort beispielsweise über das Internet auf die Heizung eingewirkt werden. Bei Bedarf können die Terminkalender der Hausbenutzer mit dem Terminkalender der Heizung verknüpft werden. Wenn die Hausbenutzer zum Beispiel Ihre Weckzeiten in Ihrer persönlichen Agenda eintragen, kann die Heizung von Weckzeiten, die außerhalb der vordefinierten Belegungszeiten liegen, übersteuert werden.

### 4. Alarmierung, Benachrichtigung von Servicepersonal

Innerhalb der Gebäudeleittechnik existieren auch Alarmprozesse, die durch entsprechende Prozessregler überwacht werden. Erkennt der entsprechende Alarm-Prozessregler 14 eine Störung, so informiert dieser über eine fest vorprogrammierte Servicestelle entsprechendes Servicepersonal, um beispielsweise die Liftanlage eines Bürogebäudes zu warten bzw. zu reparieren. Diese fest vorprogrammierten Servicestellen müssen stets individuell dem Alarm-Prozessregler einprogrammiert werden. Mit der vorliegenden Erfindung kann der Alarm-Prozessregler 14 auf einfache Art und Weise entsprechende zentrale Datenbanken 1 abrufen, um diesen die aktuelle Servicenummer zu entnehmen. Dadurch wird die Wartung solcher Systeme bei Änderungen entsprechender Störungsmeldungen oder Servicenummern wesentlich einfacher, weil diese letztendlich nur an einem Ort angepaßt werden müssen, nämlich im zentralen Datenspeicher 2 bzw. innerhalb der zentralen Datenbank 1.

Selbstverständlich ist die Erfindung nicht auf die gezeigten und beschriebenen Ausführungsbeispiele beschränkt. Beispielsweise kann die Datenbank 1 kann auch im Regelsystem 13 angeordnet werden.

## Patentansprüche

1. System zur Steuerung von Prozessreglern, mit
mindestens einem Prozessregler (14), der zur Regelung von Prozessen (22) oder Teilprozessen (23a..23d) in Speicher (16) speicherbare Prozessprogramme ausführt und entsprechende Steuersignale über mindestens eine Kommunikationsschnittstelle (17) an die Prozesse (22) oder Teilprozesse (23a..23d) sendet, und der ggf. Rückmeldesignale von den Prozessen (22) oder Teilprozessen (23a..23d) erhält, und
einem Datenspeicher (2), der über Kommunikationswege (11) Daten zur Steuerung des mindestens einen Prozessreglers (14) an den Prozessregler (14) übermittelt,
**dadurch gekennzeichnet,**
**daß** der Datenspeicher (2) eine Datenbank (1) aufweist, die
Daten enthält, die zur Steuerung des mindestens einen Prozessreglers (14) verwendbar sind, die über Kommunikationswege (11) von verschiedenen Orten aus veränderbar sind, und
die zumindest teilweise Informationen für die zu regelnden Prozesse (22) oder Teilprozesse (23a..23d) enthalten.

2. System nach Anspruch 1,
**dadurch gekennzeichnet,**
**daß** der mindestens eine Prozessregler (14) die in Speicher (16) speicherbaren Prozessprogramme mittels der Daten der Datenbank (1) verändert und/oder die Prozessprogramme mittels der Daten der Datenbank (1) ausführt.

3. System nach einem der Ansprüche 1 oder 2,
**dadurch gekennzeichnet,**
**daß** sich die Datenbank (1) in einem zentralen Datenspeicher (2) befindet, der über Kommunikationswege (11) und/oder einem Kommunikationsnetz (7) mit mindestens einem Datenverarbeitungsgerät (8, 9, 10) verbindbar ist, so daß die Daten der Datenbank (1) durch das mindestens eine Datenverarbeitungsgerät (8, 9, 10) veränderbar sind.

4. System nach einem der Ansprüche 1 oder 2,
**dadurch gekennzeichnet,**
**daß** sich die Datenbank (1) bzw. Kopien der Datenbank (1) in mehreren dezentralen Datenspeichern (2) befindet, die über Kommunikationswege (11) und/oder einem Kommunikationsnetz (7) miteinander verbindbar sind, wobei die Daten der Datenbank (1) bzw. die Daten der Kopien der Datenbank (1) mittels eines Synchronisationsprozesses zwischen den dezentralen Datenspeichern (2) abgleichbar sind.

5. System nach Anspruch 4,
**dadurch gekennzeichnet,**
**daß** der mindestens eine Prozessregler (14) die Daten derjenigen Kopie der Datenbank (1) bzw. der Datenbank (1) abruft, die die aktuellsten Daten enthält.

6. System nach einem der vorhergehenden Ansprüche,
**dadurch gekennzeichnet,**
**daß** sich die Datenbank (1) bzw. Kopien der Datenbank (1) in dezentralen Datenspeichern (2) befinden, die sich in verschiedenen Datenverarbeitungsgeräten (8, 9, 10, 14) befinden.

7. System nach einem der vorhergehenden Ansprüche,
**dadurch gekennzeichnet,**
**daß** die Daten der Datenbank (1) zur Steuerung mehrerer Prozeßregler (14) verwendbar sind, wobei jeder Prozeßregler (14) zur Regelung eines Regelsystems (13) dient.

8. System nach einem der vorhergehenden Ansprüche,
**dadurch gekennzeichnet,**
**daß** die Datenbank (1) in einem Computer (8), und/oder in einem Funktelefon (9) und/oder in einem elektronischen Kalender (10) abspeicherbar ist,
**daß** der Computer (8), und/oder das Funktelefon (9) und/oder der elektronische Kalender (10) die Daten der Datenbank (1) untereinander austauschen und synchronisieren, und
**daß** die Daten der Datenbank (1) zur Steuerung eines Heizungsreglers zur Regelung der Raumklimas eines Raumes dienen, den der Benutzer des Computers (8), und/oder des Funktelefons (9) und/oder des elektronischen Kalenders (10) benutzt.

9. Verfahren zur Steuerung von Prozessreglern, wobei
Prozesse (22) oder Teilprozesse (23a..23d) durch mindestens einen Prozessregler (14) geregelt werden, indem in Speicher (16) speicherbare Prozessprogramme durch den mindestens einen Prozeßregler (14) ausgeführt und entsprechende Steuersignale über mindestens eine Kommunikationsschnittstelle (17) an die Prozesse (22) oder Teilprozesse (23a..23d) gesendet werden, wobei ggf. Rückmeldesignale von den Prozessen (22) oder Teilprozessen (23a..23d) an den mindestens einen Prozeßregler (14) rückgemeldet werden, und wobei
über Kommunikationswege (11) Daten aus einem Datenspeicher (2) zur Steuerung des mindestens einen Prozessreglers (14) an den Prozessregler (14) übermittelt werden,
**dadurch gekennzeichnet,**
**daß** die Daten des Datenspeichers (2) in mindestens einer Datenbank (1) gespeichert werden,
**daß** die Daten der Datenbank (1) zur Steuerung des mindestens einen Prozessreglers (14) verwendet werden,
**daß** die Daten in der Datenbank (1) derart gespeichert werden, daß die Daten über Kommunikationswege (11) von verschiedenen Orten aus veränderbar sind, und
**daß** die Daten der Datenbank (1) zumindest teilweise Informationen für die zu regelnden Prozesse (22) oder Teilprozesse (23a..23d) enthalten.

10. Verfahren nach Anspruch 9,
**dadurch gekennzeichnet,**
**daß** die Datenbank (1) auf verschiedenen Datenverarbeitungsgeräten (8, 9, 10) gespeichert wird,
**daß** die verschiedenen Datenverarbeitungsgeräte (8, 9, 10) über Kommunikationswege (11) und/oder einem Kommunikationsnetz (7) verbunden werden, und
**daß** die Daten der Datenbank (1) über Kommunikationswege (11) und/oder einem Kommunikationsnetz (7) zwischen den verschiedenen Datenverarbeitungsgeräten (8, 9, 10) ausgetauscht und synchronisiert werden.

11. Verfahren nach Anspruch 10,
**dadurch gekennzeichnet,**
**daß** die Daten derjenigen Datenbank (1) zur Steuerung des Prozessreglers (14) verwendet werden, die die aktuellsten Daten enthält.

12. Verfahren nach einem der Ansprüche 9 - 11,
**dadurch gekennzeichnet,**
**daß** die Datenbank (1) in einem Computer (8), und/oder in einem Funktelefon (9) und/oder in einem elektronischen Kalender (10) gespeichert wird,
**daß** die Daten der Datenbank (1) des Computers (8), und/oder des Funktelefons (9) und/oder des elektronischen Kalenders (10) untereinander über bidirektionale Verbindungsleitungen, und/oder über Funkverbindungen und/oder über das Internet ausgetauscht und synchronisiert werden,
**daß** die Daten der Datenbank (1) u.a. Informationen über die An-und Abwesenheitszeiten eines Benutzers von Räumen eines Gebäudes beinhalten, und
**daß** diese Informationen zur Steuerung eines oder mehrerer Heizungsregler zur Regelung der Raumklimas der Räume dienen.

13. Verfahren nach Anspruch 12,
**dadurch gekennzeichnet,**
**daß** jede Datenbank (1) einem individuellen Benutzer von Räumen eines Gebäudes zugeordnet wird, und
**daß** die Daten jeder Datenbank (1) zur Steuerung eines oder mehrerer Heizungsregler zur Regelung der Raumklimas der Räume dienen, die von den Benutzern benutzt werden.

14. Verfahren nach einem der Ansprüche 9 - 13,
**dadurch gekennzeichnet,**
**daß** die Daten der Datenbank (1) aus den persönlichen Agenden von Benutzern eines Gebäudes zusammengesetzt werden und zur Steuerung verschiedener Prozessregler (14) verwendet werden, die verschiedene Prozesse (22) oder Teilprozesse (23a..23d) eines Gebäudes regeln.

15. Verwendung eines Systems nach einem der Ansprüche 1 - 8 oder eines Verfahrens nach einem der Ansprüche 9 - 14, zur Steuerung von Heizungs- und/oder Lüftungsreglern und/oder Klimaanlagen eines Gebäudes, wobei die Datenbank (1) aus den Daten der persönlichen Terminkalender der Benutzer des Gebäudes besteht.

16. Verwendung eines Systems nach einem der Ansprüche 1 - 8 oder eines Verfahrens nach einem der Ansprüche 9 - 14, zur Steuerung der Gebäudeleittechnik eines Gebäudes, wobei die Prozessregler (14) der Gebäudeleittechnik die Daten von Datenbanken (1) persönlicher Terminkalender sämtlicher Benutzern des Gebäudes abrufen, um die in Speicher (16) speicherbaren Prozessprogramme anhand dieser Daten auszuführen.
